# EUROPEAN PATENT APPLICATION

(11) **EP 4 831 478 A1**
(43) Date of publication of application: **28.10.2026**
(21) Application number: 25382419.7
(22) Date of filing: 25.04.2025
(51) Int. Cl.: F03D 7/02

(54) **METHODS AND SYSTEMS FOR MITIGATION OF WIND TURBINE BLADE VIBRATIONS**

(71) Applicant: GE VERNOVA RENOVABLES ESPAÑA, S.L., 08005 Barcelona (ES)
(72) Inventor: PINEDA AMO, Isaac, 08005 Barcelona (ES); HOFFMANN, Till, 48499 Salzbergen (DE)
(74) Representative: Bardehle Pagenberg S.L.

(57) **Abstract**

The present disclosure relates to methods (100, 200, 500) for mitigating an edgewise vibration in a blade (22) of a rotor (18) of a wind turbine (10) during a vibration event. The wind turbine (10) is not generating electrical power. The method (100. 200, 500) comprises acquiring a signal with a sensor (121) arranged at the blade (22), and determining a magnitude indicative of a vibration of the blade (22) in an edgewise direction based on the acquired signal. The method (100, 200, 500) also comprises detecting the vibration event based on the determined magnitude, and assigning a risk category to the detected vibration event based on the determined magnitude. Moreover, the method (100, 200, 500) comprises executing a vibration mitigation action in the wind turbine (10) based on the assigned risk category. The present disclosure relates also to a wind turbine (10) comprising a control unit configured for implementing such methods (100).

## Description

The present disclosure relates to methods for mitigating vibrations in wind turbine blades. More particularly, the present disclosure relates to methods for mitigating edgewise vibrations in wind turbine blades when the wind turbine is not generating electrical power. The present disclosure also relates to wind turbines comprising control units configured for mitigating blade vibrations.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

There is a trend to make wind turbine blades increasingly longer to capture more wind and convert the energy of the wind into electricity. This trend makes blades more flexible and more prone to aero-elastic instabilities, e.g. vibrations of the blades. Wind turbine blades vibrating excessively may get damaged. In particular, edgewise vibrations can become particularly dangerous for the structural integrity of the wind turbine blades, as very low damping is provided for oscillation modes occurring in this direction. Furthermore, vibrating blades can excite wind turbine rotor modes, thus creating risks of major potential damages for the entire wind turbine.

When the wind turbine is in operation, i.e. producing energy and connected to an electrical grid, a wind turbine controller may operate auxiliary drive systems such as a pitch system or a yaw system to reduce or change loads on the blades. This way, vibrations of the blades may be counteracted. However, the problem of aero-elastic instabilities can also be serious for non-generating wind turbines, that is wind turbines not in operation or, in other words, in situations when the wind turbines are not generating power. Such non-generating or non-operating situations may involve parked wind turbines, i.e. wind turbines with their rotor locked, or wind turbines in idling, i.e. wind turbines whose rotor is allowed to spin freely while not generating any electrical power.

Indeed, when a wind turbine is parked or in idling, the wind may blow against the wind turbine blades from unusual directions, i.e. different from those typically encountered during operation. The airflow around the wind turbine may cause the wind turbine blade to vibrate, specifically in an edgewise direction. In particular, edgewise vibrations comprising vortex-induced vibrations (VIV) and stall-induced vibrations (SIV) may arise.

Vortex-induced vibrations are caused by the shedding of vortices from the blade surface. The vortices exert periodic forces on the blade, thus inducing vibration of the same. If the frequency of these vortices matches the natural frequency of the blade, resonance leading to dangerous vibrations can occur. Vortex-induced vibrations typically occurs at relatively low wind speeds, e.g. in the range of 10 m/s, and at high, e.g. about 90 degrees, angles of attack. The angle of attack is defined as the angle between the chord line of the blade and the incoming wind direction. Furthermore, VIVs are particularly relevant in scenarios comprising a locked rotor.

Regarding stall-induced vibrations, these typically become more prevalent while the wind turbine is in idling. SIVs tend to occur at relatively high wind speeds, e.g. in the range of 15-20 m/s, and at moderate angles of attack, e.g. in the range of 30 to 45 degrees. As with VIVs, stall-induced vibrations can also induce damage on the blades. In particular, vortex and stall induced vibrations can lead to blade failure at the blade root due to, e.g. increased blade fatigue. Moreover, the consequences of such vibration can be exacerbated if all the blades of the wind turbine vibrate in phase, or if the blades vibrate in resonance. Such resonances, even if they last only a short time and do not induce major instantaneous failures, can indeed create loads that negatively affect the lifetime of structural components.

Different solutions have been proposed to mitigate the effects of blade vibrations. The use of mechanical blade dampers has been proposed. Such dampers are installed in the blade and they act to counteract excitation forces, thus mitigating potentially induced vibrations. However, such dampers tend to be complex, heavy, and costly. Other solutions, which are mostly applicable in certain scenarios, e.g. during installation or commissioning of wind turbines, comprise the use of surface devices for mitigating wind turbine vibrations. These surface devices may be secured to a wind turbine blade for disrupting the air flow around the wind turbine blade. Such devices may be relatively large, both in length and in cross-section. Consequently, installation of such devices is cumbersome.

Other options to handle blade vibrations comprise the pre-identification of potentially dangerous conditions. Hence, different parameters like wind speed or wind turbine misalignment can be measured. These can be combined with computer simulations, which may be employed to determine what specific sets of parameters are more likely to induce blade vibrations. However, a problem with such approach is that vortex and stall induced vibrations are phenomena that are hard to simulate. Consequently, a significant risk exists of not detecting a particular set of conditions leading to blade vibrations, i.e. events actually comprising vortex induced vibrations or stall induced vibrations may remain undetected. Or, a risk also exists of imposing a too conservative approach, thus leading to unnecessary actions.

Finally, other known solutions comprise the use of detection means for detecting blade oscillations. In some cases, such detection means can comprise nacelle and/or tower sensors. Upon detection of a blade oscillation, control actions to damp detected oscillations can be implemented. However, known solutions tend to be excessively simplistic and they do not provide a proper assessment of the relevance of the detected oscillations. Consequently, sub-optimal responses are typically provided by such known solutions. In particular, vibration mitigation actions may not be applied quickly enough. Hence, even if applied, they may be insufficient to counteract the existing oscillations so that severe consequences, e.g. permanent blade damage, may not be prevented.

The present disclosure seeks to provide improved methods for mitigating vibrations in wind turbine blades while avoiding, or at least reducing, some of the drawbacks of the aforementioned approaches.

### SUMMARY

In an aspect of the present disclosure, a method for mitigating an edgewise vibration in a blade of a rotor of a wind turbine during a vibration event is provided. The wind turbine is not generating electrical power. The method comprises acquiring a signal with a sensor arranged at the blade, and determining a magnitude indicative of a vibration of the blade in an edgewise direction based on the acquired signal. The method also comprises detecting the vibration event based on the determined magnitude, and assigning a risk category to the detected vibration event based on the determined magnitude. Moreover, the method comprises executing a vibration mitigation action in the wind turbine based on the assigned risk category.

According to this aspect, a sensor is arranged at the blade. In this manner, a direct and reliable monitoring of the state of the blade can be provided. Furthermore, the signal comprises a time series of data and the magnitude determined based on the acquired signal is indicative of a vibration, i.e. it is indicative of a load or force suffered by the blade. Specifically, the movement and/or deformation of the blade can be assessed with certainty, thus increasing the effectiveness of the method. The determined magnitude is indicative of a vibration of the blade in the edgewise direction. It is worth noting that blade vibrations or oscillations do typically comprise coupled deformations or oscillations in both the edgewise and the flapwise direction. However, oscillation phenomena are more prevalent in the edgewise direction as, unlike in the flapwise direction, no significant damping is present.

Upon detection of a vibration event, a categorization is carried out. Indeed, the vibration event is not only detected, but a risk category is assigned to the same. In this manner, an improved prioritization is achieved, thus optimizing the response of the system to the detected vibration. Accordingly, a vibration mitigation action is implemented in the wind turbine. However, such vibration mitigation action is not merely based on the detection of the vibration, but also on the assigned risk category. Such capability to categorize the vibration events may avoid overreaction in front of relatively mild events, while allowing strict and urgent action for events exhibiting high risk.

In another aspect of the disclosure, a method for controlling a fleet of wind turbines is provided. The wind turbines comprise a rotor with one or more blades. The method comprises monitoring the fleet of wind turbines. Monitoring the wind turbines comprises receiving data related to blade vibrations events in one or more non-generating wind turbines of the fleet of wind turbines. The method also comprises defining actions for the one or more of the non-generating wind turbines for mitigating vibrations in the corresponding blades. The definition of the actions is based on risk categories assigned to the blade vibration events. Furthermore, the method comprises sending instructions for executing the defined actions.

According to this aspect of the disclosure, an improved response at fleet level is provided. Hence, not only the blade vibrations of a single wind turbine are monitored, but multiple wind turbines are taken into account while practicing the method. Consequently, a more flexible and optimized response can be provided at larger scale. Specifically, by assigning risk categories to the vibration events detected for the different wind turbines, a more efficient response is achieved. This is particularly the case for fleets comprising a large number of wind turbines and for vibration mitigation actions requiring human intervention. In some cases, the fleet of wind turbines may be provided in the form of a wind farm. In other cases, the fleet of wind turbines may even comprise a plurality of wind farms. Furthermore, the non-generating wind turbines may either be in a parked or locked state, or in idling.

In still another aspect of the present disclosure, a wind turbine is provided. The wind turbine comprises a rotor with a plurality of blades, a sensor arranged in at least one of the blades, and a control unit. The control unit is configured for receiving a signal acquired with the sensor, and for determining a magnitude indicative of an amplitude of a vibration of the corresponding blade, i.e. the blade comprising the sensor, based on the received signal. The control unit is further configured for detecting a vibration event and assigning a risk category to the detected vibration event based on the determined magnitude. Furthermore, the control unit is configured for initiating a vibration mitigation action in the wind turbine based on the risk category.

According to this aspect of the disclosure, a wind turbine with an improved capability to withstand blade vibrations is provided. Hence, the wind turbine according to this aspect of the disclosure comprises a control unit that is capable of implementing the methods according to the previous aspects. Accordingly, the above-mentioned advantages are also applicable to the resulting wind turbine. In particular, as shown in more detail below, initiating the vibration mitigation actions can comprise a wide range of different actions, which may be adapted to the specific needs, e.g. to the risk category associated with the detected vibration event.

Throughout this disclosure, the term "idling" may be understood as a situation in which the wind turbine is not producing electricity, and the rotor is allowed to spin substantially freely. It is also understood that, depending on prevailing conditions, e.g. wind speed, orientation between the wind turbine and the wind direction, or pitch angle of the blades, such an idling situation may result in a rotor that is substantially standstill.

Throughout the present disclosure, the terms "parked" or "locked" are used interchangeably, and they may be understood as a situation in which the wind turbine is not producing electricity, and the rotor is actively locked with a brake or locking mechanism.

Throughout this disclosure, the term edgewise vibrations or oscillations is understood as the component of the blade vibrations or oscillations in the edgewise direction of the blade. Accordingly, this term is not to be interpreted as necessarily referring to purely edgewise vibrations, i.e. as vibrations exhibiting only an edgewise movement or deformation of the blade. Hence, blade vibrations exhibit components in both the edgewise and the flapwise direction, and those oscillations are coupled. However, damping is present in the flapwise direction, so vibration or oscillation phenomena are particularly noticeable in the edgewise direction.

### BRIEF DESCRIPTION OF THE DRAWINGS

Non-limiting examples of the present disclosure will be described in the following, with reference to the drawings, in which:
Figure 1 illustrates a perspective view of one example of a wind turbine;
Figure 2 illustrates a simplified, internal view of one example of the nacelle of the wind turbine of the figure 1;
Figure 3 illustrates a schematic perspective view of a wind turbine blade shown in figure 1;
Figure 4 illustrates blades of a wind turbine with sensors according to an example;
Figures 5A-5C illustrate an example of operating conditions potentially leading to blade vibrations (Fig. 5A), as well as associated observed operational conditions (Fig. 5B and 5C);
Figure 6 shows a flowchart of a method for mitigating vibrations in a blade of a wind turbine according to an example;
Figure 7 provides a more detailed flowchart of a method for mitigating vibrations in a blade of a wind turbine according to another example;
Figure 8 schematically illustrate a load rose for a wind turbine blade indicating design ultimate loads, reference fatigue loads, and experimental loads obtained according to an example;
Figure 9 illustrates an example of an experimental detection of a vibration in a wind turbine blade;
Figure 10 illustrates a flowchart of an example of a method for controlling a fleet of wind turbines;
Figure 11 schematically illustrates a wind farm comprising a plurality of wind turbines and a wind farm controller; and
Figure 12 shows an example of a dashboard obtained while implementing a method according to an example of the present disclosure in a wind farm with a plurality of wind turbines.

### DETAILED DESCRIPTION OF EXAMPLES

Reference now will be made in detail to embodiments, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one example can be used with another example to yield a still further example. Thus, it is intended that the present disclosure covers such modifications and variations as come within the scope of the appended claims and their equivalents.

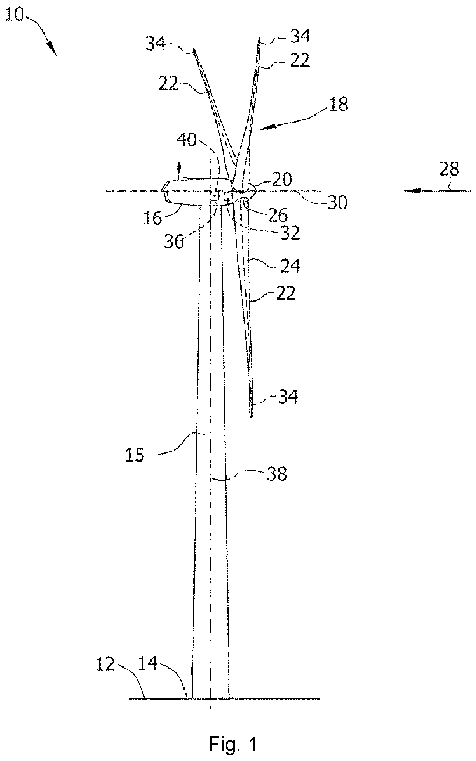

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in Figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root region 24 to the hub 20 at a plurality of load transfer regions 26. The load transfer regions 26 may have a hub load transfer region and a blade load transfer region (both not shown in Figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. As wind strikes the rotor blades 22 from a wind direction 28, the rotor 18 is rotated about a rotor longitudinal axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, e.g. an angle that determines an orientation of the rotor blades 22 with respect to the local wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed.

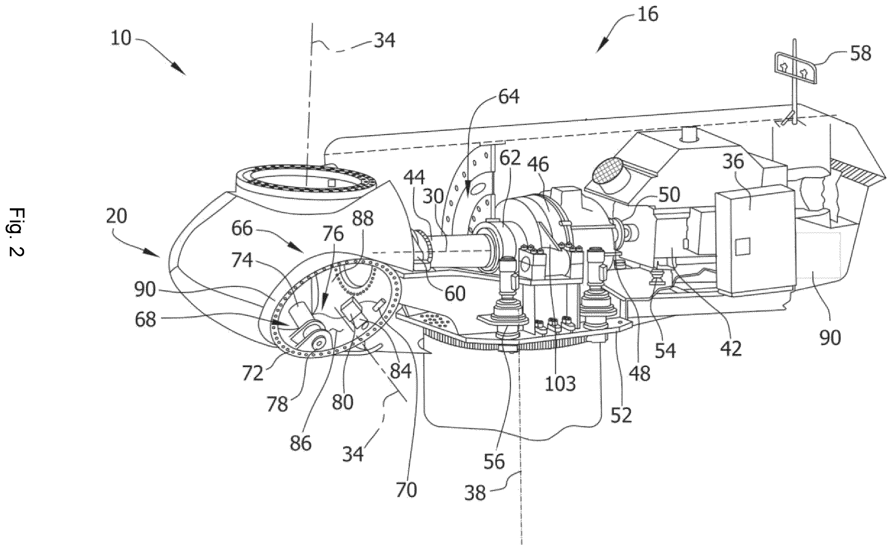

In the example, a blade pitch of each rotor blade 22 is controlled individually by a wind turbine controller 36 or by a pitch control system 80 (see Figure 2). Alternatively, the blade pitch for all rotor blades 22 may be controlled simultaneously by said control systems.

Further, in the example, as the wind direction 28 changes, a yaw direction of the nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed control system throughout the wind turbine 10, on the support system 14, within a wind farm, and/or at a remote-control center. The wind turbine controller 36 may include one or more processors 40 configured to perform one or more of the steps of the methods described herein. Further, many of the other components described herein include one or more processors. The wind turbine controller 36 may also include a memory, e.g. one or more memory devices. As used herein, a memory may comprise memory element(s) including, but not limited to, a computer readable medium (e.g., random access memory (RAM)), a computer readable non-volatile medium (e.g., a flash memory), a floppy disk, a compact disc-read only memory (CD-ROM), a magnetooptical disk (MOD), a digital versatile disc (DVD) and/or other suitable memory elements.

Figure 2 is an enlarged sectional view of a portion of the wind turbine 10. In the example, the wind turbine 10 includes the nacelle 16 and the rotor 18 that is rotatably coupled at the nacelle 16. More specifically, the hub 20 of the rotor 18 is rotatably coupled to a generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between e.g. 400V to 1000 V into electrical energy having medium voltage (e.g. 10 - 35 kV). Offshore wind turbines may have, for example, generator voltages between 650 V and 3500 V. Transformer voltages may for instance be between 30 kV and 70 kV, or even higher, e.g. 132 kV. In particular, higher voltages result in increased challenges when dealing with faults so faster protection requirements are needed. Said electrical energy is conducted via power cables from the nacelle 16 into the tower 15.

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a forward support bearing 60 and an aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The main shaft 44, generator 42, gearbox 46, high-speed shaft 48, coupling 50, and any associated fastening, support, and/or securing device including, but not limited to, main frame 52, and forward support bearing 60 and aft support bearing 62, are sometimes referred to as a drive train 64.

In some examples, the wind turbine may be a direct drive wind turbine without gearbox 46. Generator 42 operates at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 may also include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system which may include a wind vane and an anemometer. The meteorological measurement system 58 can provide information to the wind turbine controller 36 that may include wind direction 28 and/or wind speed.

In the example, the pitch system 32 (see Figure 1) is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power generator 84 provides power to the pitch assembly 66 only during an electrical power loss event of the wind turbine 10. The electrical power loss event may include power grid loss or dip, malfunctioning of an electrical system of the wind turbine 10, and/or failure of the wind turbine controller 36. During the electrical power loss event, the power generator 84 operates to provide electrical power to the pitch assembly 66 such that pitch assembly 66 can operate during the electrical power loss event.

In the example, the pitch drive system 68, the sensor 70, the pitch control system 80, cables, and the power generator 84 are each positioned in a cavity 86 defined by an inner surface 88 of hub 20. In an alternative embodiment, said components are positioned with respect to an outer surface of hub 20 and may be coupled, directly or indirectly, to the outer surface.

As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein.

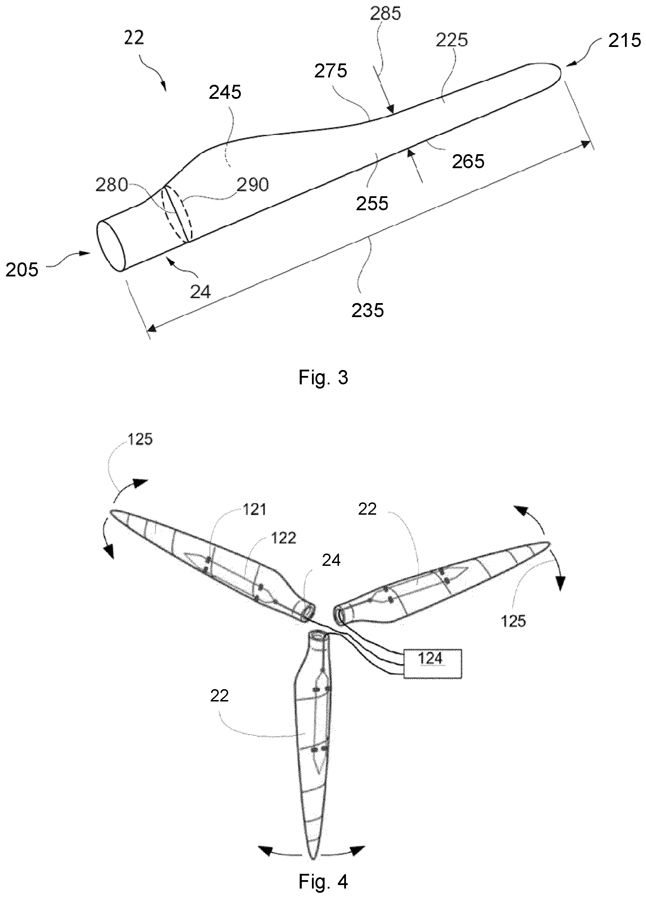

A schematic perspective view of a wind turbine blade 22, e.g. one of the rotor blades 22 shown in Figure 1, is illustrated as an example in Figure 3. The rotor blade 22 includes a blade root 205, a blade tip 215, a leading edge 265 and a trailing edge 275. The blade root 205 is configured for mounting the rotor blade 22 to the hub 20 of a wind turbine 10. The wind turbine blade 22 extends lengthwise between the blade root 205 and the blade tip 215. A span 235 defines a length of the rotor blade 22 between said blade root 205 and blade tip 215. A chord 280 at a given position of the blade is an imaginary straight line joining the leading edge 265 and the trailing edge 275, the cross-section generally having airfoil shaped cross-section. As is generally understood, a chordwise direction is substantially perpendicular to a spanwise direction. Also, the chord 280 may vary in length 285 as the rotor blade 22 extends from the blade root 205 to the blade tip 215. The wind turbine blade 22 also includes a pressure side 245 and a suction side 255 extending between the leading edge 265 and the trailing edge 275. A tip region 225 may be understood as a portion of a wind turbine blade 22 that includes the blade tip 215. A tip region may have a length of 33%, 30%, or 25% of the span or less. A blade root region 24 may be understood as a portion of the blade that includes blade root 205. A root region may have a length of e.g. 33%, 30% of the span or less.

The rotor blade 22, at different spanwise positions, has different aerodynamic profiles and thus can have airfoil shaped cross-sections 290, such as a symmetrical or cambered airfoil-shaped cross-section. Close to a root 205 of the blade 22, the cross-section of the blade may be rounded, even circular or almost circular. Closer to a tip 215 of the blade 22, the cross-section of the blade may be thinner and may have an airfoil shape.

When a wind turbine is not operating, e.g. parked or in idling, vibrations caused by the air flowing around the wind turbine 10, in particular around the wind turbine blades 22, may stress and damage the wind turbine blades 22 and the wind turbine 10.

At least two types of oscillations or vibration phenomena may happen. The first ones are so-called vortex induced vibrations (VIVs), and these can arise particularly when an angle of attack for a blade or airfoil portion is around 90 degrees. Vortex shedding may contribute to enhance the wind turbine blade 22 oscillation. The second type of oscillations are stall induced vibrations (SIVs), which can arise when the angle of attack is close to stall angles, e.g. 30 degrees - 45 degrees. The angle of attack may be understood as a geometrical angle between a flow direction of the wind and the chord of a rotor blade or a local chord of a rotor blade section.

Vibrations or oscillations may occur in different directions relative to the orientation of the blade 22. On the one hand, edgewise vibrations occur in a direction along the chord 280 between the trailing edge 275 and the leading edge 265, i.e. edgewise vibrations involve back-and-forth motion of the blade 22 in the plane of the chord 280. On the other hand, flapwise oscillations take place in a direction perpendicular to the chord 280 of the blade 22, i.e. in a direction perpendicular to the edgewise oscillations. Edgewise vibrations may become particularly relevant due to the lack of significant damping in this direction.

Figure 4 illustrates an example of blades 22 of a wind turbine 10 (not shown) with sensors 121 for measuring an oscillation of the blade 22. In particular, in this example, the sensors 121 may be configured for measuring a deformation of the blade 22. The sensors may be, e.g. strain sensors, and they may be provided in one or more blades 22. Specifically, in the example illustrated in Figure 4, sensors 121 are arranged in all the blades 22. The sensors 121 may be fiber optic strain gauges, which may be fixed to the structure of the blades 22 so as to measure strain at different portions of the blade 22, e.g. in the blade root region 24. The strain sensors 121 may be connected with each other through an optical path 122, e.g. optical fiber. The optical path 122 may allow connection with a reader 124.

It is understood that the number and location of the sensors 121 may vary depending on particular requirements. Furthermore, it is understood that other types of sensors, capable of indicating a deformation or movement of the blade 22, may be used. Examples include accelerometers, displacement sensors, or fiber Bragg grating sensors. Moreover, different types of sensors may be combined in the same blade 22.

As also shown in Figure 4, the oscillating displacement of the blades 22 may occur in a substantially edgewise direction as schematically depicted by arrows 125.

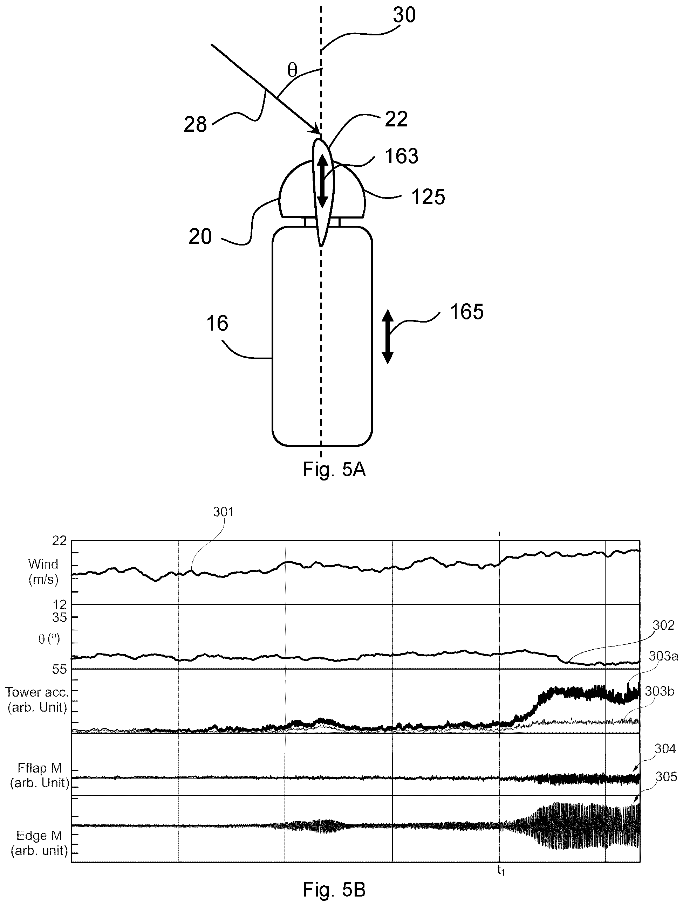

Figure 5A schematically illustrates an example of a scenario that can potentially induce such undesired oscillations. In this example, the wind turbine 10 is locked and the yaw system is de-energized. Accordingly, the wind turbine 10 cannot rotate to align itself with the wind direction 28. In particular, in this example, a large misalignment, represented by the angle θ, is present between the wind direction 28 and the rotor longitudinal axis 30 of the wind turbine 10. Furthermore, a relatively high wind speed, e.g. in the range of 20 m/s, is assumed. Finally, the blades 22 (only one of them depicted in Figure 5A) are in a feather position, i.e. they are oriented with a pitch angle of 90 degrees or, in other words, with the leading edge 265 pointing towards the front of the wind turbine 10.

As a result of this arrangement and of the environmental conditions, blades 22 may start vibrating predominantly in an edgewise direction, i.e. in a fore-aft direction of the wind turbine 10, as schematically illustrated by arrow 163. Such oscillation can induce damage on the blades 22 themselves, especially in case a frequency of oscillation becomes close to a natural frequency of the blades 22. Furthermore, as also depicted in Figure 5A, the oscillation of the blades 22 can also excite the nacelle 16 of the wind turbine 10, which may also start moving back-and-forth in a fore-aft direction, as schematically illustrated by arrow 165. Accordingly, potential damage on other components of the wind turbine 10, such as the tower 15 supporting the nacelle 16, may arise, unless such vibration event is properly detected and mitigated.

Figure 5B illustrates a field result obtained while a wind turbine 10 was substantially arranged in a configuration like the one schematically depicted in Figure 5A. An evolution of the wind speed is depicted in the upper graph. Specifically, the wind speed curve 301 shows increased values after a time of t₁. Furthermore, as illustrated in the second graph, a significant misalignment θ, in excess of 50 degrees, is also present, as illustrated by curve 302. These conditions induce vibrations, particularly after t = t₁. Such vibrations manifest themselves as an increased acceleration of the wind turbine tower 15 (see middle graph in Figure 5B). This is particularly the case for fore-aft oscillations, which are represented by curve 303a. Side-to-side oscillations (curve 303b) are also present, although with a reduced intensity. Finally, significant vibrations can be effectively monitored by acquiring a signal in the blades 22. Hence, the fourth and the fifth graphs depict, respectively, the flapwise moment (curve 304) and the edgewise moment (curve 305) at the blade root. In particular, a waveform indicative of significant oscillations can be identified in the edgewise direction as shown in the bottom graph.

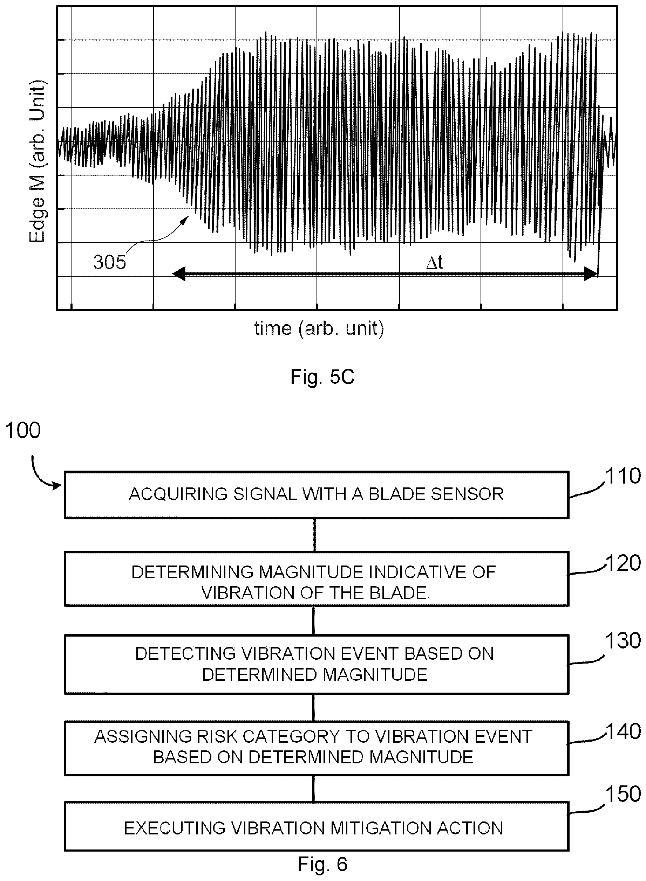

Furthermore, the oscillatory behavior of those deformations can be clearly seen in Figure 5C, which shows an enlarged view of the curve 305, i.e. of the waveform corresponding to the edgewise moment measured after t = t₁. As clearly seen in Figure 5C, an amplitude, a frequency, and a number of cycles for the represented event can be determined from the waveform resulting from the acquired signal.

Figure 6 shows a flowchart of a method 100 for mitigating an edgewise vibration in a blade 22 of a rotor 18 of a wind turbine 10 during a vibration event while the wind turbine is not generating electrical power. The method 100 comprises, in block 110, acquiring a signal with a sensor arranged at the blade 22. Block 120 comprises determining a magnitude indicative of a vibration of the blade 22 in an edgewise direction based on the signal acquired in block 110. The method 100 also comprises detecting the vibration event based on the determined magnitude in block 130. Furthermore, block 140 of the method 100 comprises assigning a risk category to the detected vibration event based on the determined magnitude. Moreover, the block 150 comprises executing a vibration mitigation action in the wind turbine 10 based on the risk category.

The use of a sensor arranged at the blade 22 facilitates a direct monitoring of the state of the blade 22. In particular, the movement and/or deformation of the blade, specifically in the edgewise direction, can be assessed with certainty and precision, thus increasing the performance of the method 100. Among other things, this allows a rapid reaction upon detection of an oscillation buildup in the specific blade 22 to either dampen or counteract the same. Furthermore, by arranging one or more sensors at the blade 22 itself, potential noise arising from other load contributions may be mitigated.

Furthermore, the categorization of the detected vibration event, which is carried out in block 140, results in a targeted response to the detected vibration event. Specifically, the response to the detected vibration can be optimized by prioritizing and selecting the most appropriate response in block 150 in view of the associated risk.

In an example of the method 100, determining the magnitude indicative of the vibration in block 120 may comprise determining an amplitude of a load oscillation. Accordingly, determining the magnitude may basically provide information on the load level suffered by the blade 22.

According to this example, the oscillatory behavior of a load acting on the blade 22 may be derived from the acquired signal, i.e. from the resulting waveform. An amplitude may be derived to quantify the magnitude of the load suffered by the blade 22 in real-time and in a convenient manner. Moreover, by determining the amplitude of the load oscillations, an objective assessment on the criticality of the experienced loads may be achieved.

In a variant of this example, the load may comprise an edgewise moment in a blade root portion 24 of the blade 22. As already mentioned, edgewise oscillations are particularly sensitive to Vortex induced vibrations (VIV) and Stall induced vibrations (SIV) as very low damping is provided in this direction. Accordingly, by using a moment in an edgewise direction, an increased sensitivity and, consequently, an improved response capability may be provided. Furthermore, blade edge moments may be particularly high in the blade root region 24 of the blade 22, thus further improving the sensitivity and reliability of the acquired signal.

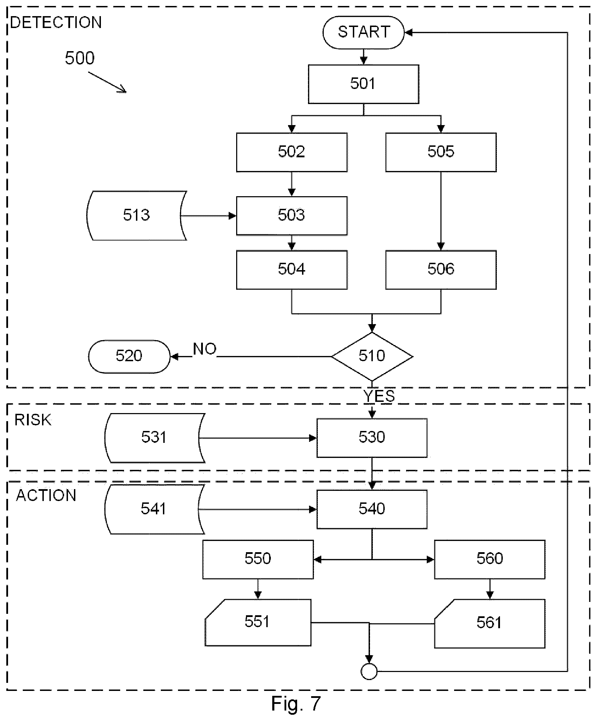

Figure 7 illustrates a more detailed view of an example of a method 500 for mitigating edgewise vibrations in a wind turbine blade 22. In particular, module 501 of method 500 may comprise reading a sensor signal, the sensor signal being configured to provide measurements indicative of edge moments acting on the blade 22.

Based on the signal received in module 501, two different routes may be followed as schematically depicted in Figure 7. On the one hand, determining the magnitude indicative of the vibration may comprise determining an amplitude of the signal acquired with the sensor. This option is schematically represented by the right hand branch in Figure 7. Hence, module 505 comprises the direct determination of the blade root edge moment from the acquired signal. Then, module 506 comprises obtaining the amplitude of the oscillating blade root edge moment. In particular, this route may be followed in examples wherein the sensor reading is directly provided in the form of a blade edge moment.

On the other hand, determining the magnitude indicative of the vibration may comprise deriving an amplitude of an oscillating load calculated at least partially based on the signal acquired with the sensor. Accordingly, in this alternative, at least an intermediate step may be required as schematically depicted on the left hand branch of the flow diagram depicted in Figure 7. In particular, module 502 may comprise storing the raw signal obtained with the sensor in the previous module 501. Such raw signal may then be employed to estimate, not to measure, a blade load in an edgewise direction (module 503). To this end, previously obtained calibration data, linking the raw signal with the blade root edge moment, may be retrieved. Such calibration data may be stored in module 513. The resulting estimate of the blade root edge moment may be used in module 504 to calculate the resulting amplitude.

Different approaches may be used for detecting a vibration even in block 130 of the method 100. In particular, in examples comprising determining an amplitude of a load oscillation, detecting the vibration event may comprise checking if the determined amplitude is higher than a threshold. With this approach, an efficient and reliable method may be envisaged. Furthermore, the value of the threshold may be adapted to different environmental, operational, or design conditions.

The use of such a threshold is also schematically depicted in the exemplary method 500 depicted in Figure 7. Hence, the amplitudes calculated in modules 504 and/or 506 may be subsequently fed to a comparator 510. The comparator 510 may be configured to check if the calculated amplitude is higher than such a threshold. If this is not the case, the method 500 may simply end in module 520, this being an indication of no vibration event being detected.

On the contrary, in case a positive answer is obtained in the comparator 510, the method 500 may proceed to a following stage which, in this example, may comprise risk classification or categorization. Hence, as also described with reference to block 140 of method 100, a risk category may be assigned to the detected event. In this manner, a more effective and optimized response may be provided.

In particular, in an example of the present disclosure, assigning the risk category to the vibration event may comprise comparing a determined amplitude with an edgewise design ultimate load and with an edgewise fatigue reference load. With this approach, both ultimate and fatigue loads may be accounted for while implementing a method for mitigating edgewise vibrations. This approach is also represented in the method 500 of Figure 7. Hence, module 530 comprises the classification or categorization module, i.e. the module that is employed to assign a certain risk category to the previously detected vibration event. In order to properly account for the different relevant loads, a module 531 may be provided. Such a module 531 may be used to store all the relevant loads, e.g. the design ultimate loads and/or the reference loads used during fatigue testing. Hence, the edgewise fatigue reference load may correspond to an actual test load employed while testing the blade 22 for fatigue behavior. Such relevant loads may be fed to module 530, so that a proper classification of the detected vibration event may be conducted.

Different strategies may be followed to classify or categorize the detected vibration even on the basis of its perceived risk. Specifically, different criteria and/or different risk levels may be envisaged. In an example, assigning the risk category to the vibration event may comprise assigning one of three potential risk levels. Hence, a low risk may be assigned if a determined amplitude is higher than a threshold but lower than an edgewise fatigue reference load. A medium risk may be assigned if the determined amplitude is higher than the edgewise fatigue reference load, but lower than the edgewise design ultimate load. Finally, a high risk may be assigned if the determined amplitude is higher than the edgewise fatigue reference load and higher than the edgewise design ultimate load.

According to this classification, optimum response actions may be undertaken (if needed). In particular, for vibration events with a low risk, one may be confident that no significant damage may be experienced by the blade 22. Specifically, a load lower than the one used during the actual fatigue testing may provide such confidence. However, even in such a situation, a proactive action may be implemented with an aim to mitigate and dampen any such vibration, thus reducing potential future risks.

Obviously, a response action may be taken with certain urgency upon detection of a vibration event with a medium risk category. In this scenario, reference loads used during fatigue test may be exceeded and, consequently, danger of structural damage for the blade may not be discarded. Consequently, actions to actively mitigate the detected vibration event may be implemented. Finally, any vibration event categorized with a high risk may require immediate severe action. Actually, based on the presented categorization, such high risk category may be indicative of loads having exceeded the ultimate design loads of the blade 22. As a result, the likelihood of permanent damage of the blade 22 is relatively high. Consequently, preemptive replacement of the affected blade 22 may be carried out. However, thanks to the implementation of the method according to the present disclosure, even such a high risk vibration event may be handled effectively, thus mitigating potentially catastrophic events leading to, e.g. permanent damage of the wind turbine 10, or detachment of all or parts of the blade 22.

In some examples, comparing a determined amplitude of a load oscillation with the edgewise design ultimate load and with the edgewise fatigue reference load may comprise comparing the amplitude with a blade load rose, wherein the blade load rose describes a relationship between ultimate design loads of the blade in flapwise and edgewise directions. In this manner, the assignment of the risk category to the detected vibration event, e.g. in block 140 of the method 100 described with reference to Figure 6 or in module 530 of the method 500 described with reference to Figure 7, may allow a more comprehensive analysis of the dynamic behavior of the blade 22 in front of wind induced aero-elastic instabilities.

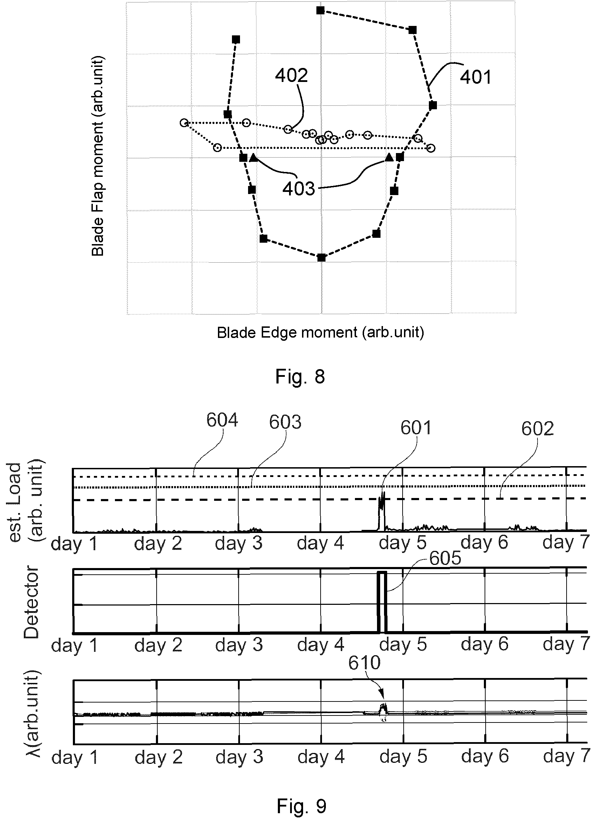

Such a load rose is schematically depicted in Figure 8. The horizontal axis represents the blade edge moment, whereas the vertical axis represents the blade flap moment. Hence, as shown in the load rose, certain load combinations may result particularly hazardous. Accordingly, in these examples, a more optimized response may be achieved. In particular, Figure 8 shows a curve 410 with the ultimate design loads, i.e. the combinations of edge and flap moments that define the design limits of the blade 22. Figure 8 also shows two individual points 403, which are indicative of the edgewise reference load used for fatigue testing. Finally, Figure 8 also depicts a curve 402 illustrating experimental results obtained in a wind turbine 10. As shown in the left-hand side of the load rose, i.e. in the region covering from about 270° to 300° of the load rose, the measured loads in this case exceeded both the fatigue reference loads (as represented by points 403) and the corresponding design ultimate loads (as represented by the curve 401). Accordingly, in this example, a vibration event would be detected and this would be categorized with a high risk.

Figure 9 shows a field example comprising detection of a blade vibration event. The upper graph shows a curve 601 indicative of an estimated edgewise load at the blade root 205 of the blade 22. Such curve 601 is compared with a certain threshold 602 to enable detection of a blade vibration event. Furthermore, as previously indicated, a fatigue reference load 603 and an ultimate design load 604 are also considered for risk categorization.

As shown in Figure 9, the estimated blade root load exceeds the predetermined threshold 602 for a certain period of time, in this case ranging for a few hours, in day 4 of the monitoring. Accordingly, as shown in the middle graph, a blade vibration event detector signal 605 is activated, i.e. the detector signal is assigned a high or 1 value. However, as also depicted in the upper graph, the value of the estimated load, as represented by curve 601, remains below the predetermined values for the fatigue reference load 603 and for the ultimate design load 604. Consequently, in this particular case, the detected vibration event may be assigned a low risk category.

Also shown in the lower graph of Figure 9 is the raw signal obtained from the sensors arranged at the blade 22. In this example, fiber Bragg grating sensors may be employed. Accordingly, the blade oscillation may translate into a wavelength deviation 610. In variants of the method, the raw signal, i.e. the wavelength deviation 610, may be used to identify the presence of a blade vibration. To this end, the wavelength deviation 610 may be considered in isolation, or it may be used to estimate a load. The latter option is the one selected in the example of Figure 9 and, for this reason, the previous discussion is based on the estimated load defined by curve 601 in the upper graph.

As illustrated in block 150 of method 100 described in Figure 6, a vibration mitigation action is selected upon detection of the vibration event. Such vibration action is determined on the basis of the risk category assigned in block 140. Such approach is also schematically represented in Figure 7. Hence, in method 500, a module 540 is provided to assign a recommended action. In some examples, the vibration mitigation action may be selected based on a previously selected vibration mitigation action for the vibration event. The information concerning previously implemented actions may be stored in a module 541. In this example, a more robust approach may be provided. Hence, different vibration mitigation actions may be envisaged, and their selection may be based on their respective history. In particular, a relatively less aggressive vibration mitigation action may be first attempted. However, if a vibration event continues to be detected after application of such less aggressive action, a decision to switch to a different vibration mitigation action may be implemented.

In some further examples, the selected vibration mitigation action may be at least partially based on a comparison of a current operational state of the wind turbine 10 and one or more predetermined operational states of the wind turbine 10. The predetermined operational states may be obtained from a module 541, as schematically depicted in Figure 7. According to these further examples, not only the magnitude or risk category of the vibration event may be considered. Hence, the actual operational state of the wind turbine 10 may also be considered to provide a more adequate response. Such operational state may comprise information regarding, e.g. whether the wind turbine 10 is locked or in idling. Further inputs to consider may also comprise a determination of whether the wind turbine 10 is yawing while the vibration event is detected. Additional aspects to consider may refer to the availability of wind turbine components. In particular, different vibration mitigation actions may be selected depending on the availability of certain auxiliary systems, e.g. pitch system or yaw system.

Specifically, in variants of examples comprising consideration of the operational state of the wind turbine 10, the predetermined operational states may comprise a first predetermined operational state wherein the rotor 18 of the wind turbine 10 is locked and a wind speed at a location of the wind turbine 10 exceeds a predefined threshold, such as a value of seven meters per second. Such an operational state may be associated with a potentially increasing risk. In particular, the combination of a locked rotor 18 and an elevated wind speed may induce significant blade vibrations in case of a sudden change in the wind direction 28. Accordingly, by taking this information into account, a more proactive response may be provided if needed.

The predetermined operational states may also comprise a second predetermined operational state wherein the rotor 18 is idling and a longitudinal axis 30 of the wind turbine 10 is misaligned by at least a predefined angle with respect to a wind direction 28 at a location of the wind turbine 10. Specifically, different second predetermined operational states with different predefined angles may be considered. Similarly to the previous example, potentially hazardous scenarios may arise from situations involving idling wind turbines 10 and significant misalignments. In particular, sudden increases in the wind speed, e.g. due to the presence of a wind gust, may exacerbate the likelihood of blade vibrations. Accordingly, by taking state information into account, a more pro-active action may be achieved.

The selection of the vibration mitigation action may also depend on the mechanism or strategy used for its application. Hence, as schematically represented by the two branches at the end of the flow diagram in Figure 7, the vibration mitigation action may comprise a control action carried out autonomously by a control unit of the wind turbine 10. The communication of the vibration mitigation action to the control unit may be carried out in module 550. Then, the action may be implemented in module 551. On the other hand, a manual or human intervention may be required. In this case, the vibration mitigation action may be communicated in module 560 and this may be subsequently implemented in module 561.

Increased flexibility may be achieved by enabling both autonomous and manual intervention. Depending on the characteristics of the detected vibration event, and on the operational status of the wind turbine 10, either autonomous or manual operation may be preferred. As a matter of fact, in some cases, some of the options may not be available. This includes, for instance, a situation in which the control unit of the wind turbine 10 is not operative or, on the contrary, a situation in which manual intervention is either too perilous or not practical. The latter case may exist, for instance, in case of adverse weather and, even more particularly, in case of offshore wind turbines.

A plurality of different vibration mitigation actions may be implemented in block 150 of method 100, or in modules 551 and 561 of method 500. In examples of the disclosure, the vibration mitigation action may comprise at least one of the following: unlocking of the rotor 18 if the rotor 18 of the wind turbine 10 is locked; changing an orientation of the wind turbine 10 with respect to a wind direction 28; or changing a pitch angle of the blade 22 such that the pitch angle of the blade 22 is different than a pitch angle of at least another blade 22 of the rotor 18.

Specifically, the selection of the pitch angles of the blades 22 while the rotor 18 is locked may be particularly effective to mitigate vibration effects and, more particularly, to mitigate propagation of blade vibrations to other parts of the wind turbine 10 such as the nacelle 16 or the tower 15. In a variant, a staggered pitch approach may be implemented. In this approach, the pitch angles of all the blades 22 in the rotor 18 may be slightly different. As an example, a first blade 22 may be arranged in a feathered position, i.e. with a pitch angle of 90°, a second blade 22 may be pitched at a value of approximately 95°, whereas a third blade 22 may be arranged with a pitch value of about 85°.

Unlocking of a previously locked rotor 18 may be particular advantageous for certain vibrations events. In particular, slight rotation of the rotor 18 may allow dynamic modification of the conditions at the blade 22, which may be particularly favorable in case of resonance phenomena.

Regarding actuation of the pitch system, in some variants only the pitch angle of the blade 22 where the vibration event is detected may be modified. However, in other variants, all the blades 22 may be pitched upon detection of a vibration event in at least one of the blades 22. Accordingly, a more proactive approach may arise, as detection of vibrations in a first blade 22 may be used as a proxy for potential future vibration in another blade 22 of the same wind turbine 10.

It is understood that, although a variety of implementation details are herein described in relation to the exemplary method 500 of Figure 7, those are not necessarily linked to each other. For instance, in some alternative implementations, only one of the routes to obtain the oscillation amplitude, i.e. a route based on a raw signal or a route based on an already calibrated signal, may be provided. Similarly, different vibration mitigation actions to the ones described with reference to Figure 7 may be used in different variants. Similarly, criteria used for risk classification and/or for the definition of the vibration mitigation actions may also be modified in additional examples.

In examples of the present disclosure, the methods 100, 500 may comprise returning to an original situation after detecting an end of the vibration event. Accordingly, monitoring of the wind turbine blade 22 may continue during execution of the corresponding vibration mitigation actions. Accordingly, upon determination of an end condition, the operating conditions of the wind turbine 10 may be returned to their original values, i.e. the wind turbine 10 may be returned to the state before detection of the vibration event.

Specifically, in some examples, detection of an end of the vibration event may comprise using a comparator (similar to the comparator 510 in Figure 7) to assess if a certain variable, e.g. an amplitude of a certain waveform indicative of a load suffered by the blade 22, is below a predetermined threshold. In particular, in examples comprising comparison with a threshold for blade vibration event detection, either the same or a different threshold may be used for the detection of the event and for the identification of an end of the same. In particular, a lower threshold may be used for the identification of an end of the vibration event than for the detection of the event. In this manner, a hysteresis may be achieved, thus increasing the reliability of the method.

In still other examples, a continuous monitoring may be carried out while the blade vibration mitigation action is implemented. Such monitoring may be used to generate an alarm or warning in case the mitigation action is not successful, i.e. in case the detected vibrations is not decreased after application of the vibration mitigation action(s).

As already indicated, in examples of the disclosure, determining a magnitude indicative of the vibration of the blade in an edgewise direction (block120 of Figure 6) may comprise determining an amplitude of a load oscillation. In such examples, the method 100 may also comprise counting a number of cycles in the vibration event. An example of such an implementation is shown in reference to Figure 5C. Hence, an oscillation of the blade edge moment is represented in Figure 5C for a vibration event. In this case, the vibration event may have a duration defined by a time Δt, as also illustrated in Figure 5C. By taking into account the frequency of the oscillation, the total number of cycles may be derived. This, together with the amplitude information, may be used to better characterize the contribution of each vibration event to the fatigue of the blade 22.

Regarding the amplitude, it is understood that different parameters may be employed for its characterization. Hence, in different examples of the present disclosure, the amplitude of waveform of the oscillating load may be characterized by a peak-to-peak value, a peak value, and/or a rms value of the corresponding oscillation.

Furthermore, in variants of examples comprising counting of cycles, the method 100 may comprise recording a history of vibration events endured by the blade 22. In particular, recording the history may comprise recording the number of cycles and the determined amplitude of the load oscillation over multiple vibration events. In this manner, an improved characterization of the accumulated fatigue may be obtained. Accordingly, a more optimized and/or proactive response may be provided. To this end, a storage device may be provided to store the information for each blade 22.

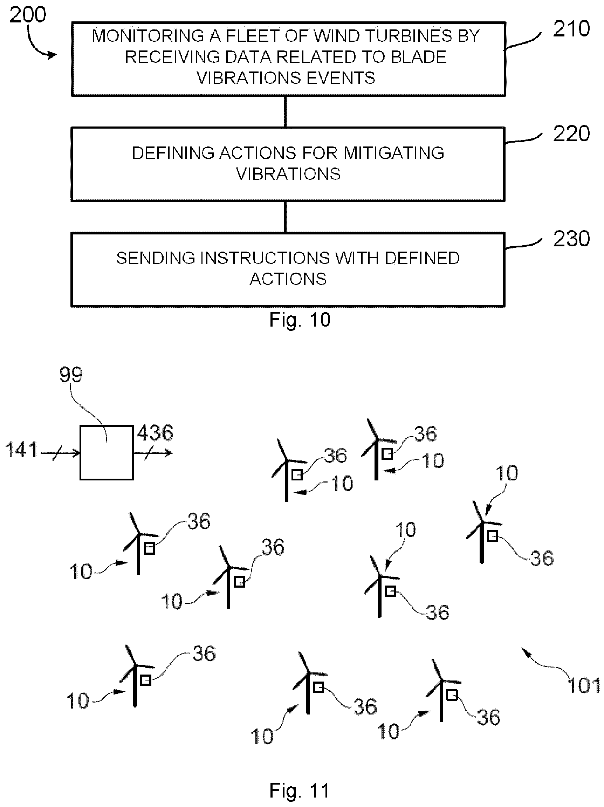

The methods and systems disclosed in the present disclosure may be particularly useful for the handling of blade vibrations in fleets or wind farms comprising a large number of wind turbines 10. Indeed, a method 200 for controlling a fleet of wind turbines 10 is depicted in the flowchart of Figure 10. The wind turbines 10 comprise a rotor 18 with one or more blades 22. The method 200 comprises, in block 210, monitoring the fleet of wind turbines 10. Monitoring includes receiving data related to blade vibration events in one or more non-generating wind turbines 10 of the fleet of wind turbines 10. Moreover, block 220 of the method 200 comprises defining actions for the one or more of the non-generating wind turbines 10 for mitigating vibrations in the corresponding blades 22. The definition of the actions is based on risk categories assigned to the blade vibration events. Then, in block 230, instructions are sent for executing the defined actions.

According to this example of the disclosure, the advantages previously described in relation to a single wind turbine 10 are extended to a fleet of wind turbines 10. In this manner, an improved handling of blade vibrations can also be achieved for a fleet comprising a plurality of wind turbines 10.

In particular, in an example of the disclosure, defining actions for the one or more of the non-generating wind turbines 10 may comprise defining actions for a plurality of non-generating wind turbines. Furthermore, the method may also comprise coordinating the actions based, at least partially, on the corresponding risk categories.

By coordinating the vibration mitigation actions, an optimized response may be provided. In particular, by taking into account the risk categorization, such a coordination may comprise prioritization of vibrations mitigation actions for those wind turbines 10 in the fleet for which detected vibration events exhibit a high risk. This may be particularly relevant in scenarios comprising manual, i.e. human, intervention. In those cases, human resources may be constrained. Accordingly, by favoring a coordinated response, increased efficiency may be achieved.

In some examples comprising control of a fleet of wind turbines 10, receiving data related to blade vibrations in block 210 of the method 200 may comprise receiving data at a centralized controller 99. Furthermore, in these examples, defining actions for the one or more of the non-generating wind turbines 10 in block 220 may comprise defining actions from the centralized controller 99. Moreover, in some variants comprising coordinating the actions based on the risk categories, such coordination may be favorably implemented in such a centralized controller 99 as well. Furthermore, the method may also comprise sending instructions for executing the defined actions from the centralized controller 99.

In a variant, sending instructions for executing the defined actions may comprise sending instructions to one or more of the one or more of the non-generating wind turbines 10. In this manner, the instructions or commands may be received by at least some of the. the wind turbine controllers 36 at the different wind turbines 10, and the wind turbine controllers 36 may implement the desired actions.

In other variants, sending instructions for executing the defined actions may comprise sending instructions to maintenance personnel supervising the fleet of wind turbines 10. Accordingly, human intervention may be optimized by providing the right instructions after taking into account the risk categories associated with the different blade vibrations events. In hybrid variants, instructions for controlling some of the wind turbines 10 in the fleet may be sent to the wind turbines 10 themselves, whereas instructions for controlling other wind turbines 10 in the fleet may be send to maintenance personnel.

Different variants may be envisaged regarding the split of tasks between local wind turbine controllers and the centralized controller 99. In some variants, the local wind turbine controllers may receive a signal from blade sensors. The local wind turbine controllers may also be in charge of detecting vibration events based on the received signals. Furthermore, the local wind turbine controllers may also assign a risk category to the detected vibration events. Then, data comprising such blade vibration events and such risk categorization may be sent to the centralized controller 99, which may receive such data. Accordingly, the centralized controller 99 may receive the information from multiple wind turbines 10, and it may define the appropriate actions for the different wind turbines 10. As indicated, in order to implement such actions, instructions may be sent from the centralized controller 99 to, e.g. the local wind turbines controllers 36, or to human operators supervising the wind turbines 10.

Alternatively, in some other examples, data may be sent to the centralized controller 99 only if certain circumstances apply. Indeed, local wind turbine controllers 36 may be configured to locally implement an action upon detection and categorization of a blade vibration event. However, data may still be sent to the centralized controller 99 in certain cases, e.g. if human intervention is required because local wind turbine controllers 36 cannot implement a corrective action, or if locally implemented control actions are not capable of mitigating the blade vibrations.

In other variants, the centralized controller 99 may implement most of the previously described actions. Indeed, in some variants, blade sensors may be used to acquire a signal at respective wind turbines 10, i.e. locally. Subsequently, such signals may be directly transferred to the centralized controller 99. Accordingly, in these variants, the data related to blade vibration events received by the centralized controller 99 may comprise raw signals obtained with the sensors. Subsequently, the centralized controller 99 may be configured to detect blade vibration events, e.g. by determining magnitudes indicative of blade vibrations in an edgewise direction based on the received signals. Moreover, the centralized controller 99 may also be in charge of assigning a risk category to the detected vibrations events. Then, the centralized controller 99 may be configured to determine the vibrations mitigation actions for the respective wind turbines 10. Subsequently, the centralized controller 99 may be configured for sending corresponding instructions to the wind turbines 10 and/or to maintenance personnel.

Other combinations, specifically regarding implementation of the detection of blade vibration events and assignments of risk categories to the same, may be envisaged.

In some examples comprising control of a fleet of wind turbines 10, the fleet may comprise a wind farm 101, e.g. like the one depicted in Figure 11. In such examples, the centralized controller 99 may comprise a wind farm controller. In other examples, the fleet of wind turbines 10 may even comprise a plurality of wind farms 101. Accordingly, the centralized controller 99 may comprise a remote operation center, which may be configured to provide service to multiple wind farms 101.

In some examples, coordinating the vibration mitigation actions may comprise determining individual vibration mitigation actions for different wind turbines 10 in centralized controller 99 based on an overall objective. Specifically, in some variants, the wind turbines 10 may constitute a wind farm 101 and the centralized controller 99 may be a wind farm controller. In such a case, the centralized controller 99 may define individual control actions for the wind turbines 10 based on a wind farm objective 101. Furthermore, instructions or commands may be sent from the centralized controller 99 to the wind turbines 10 to implement such control actions. Specifically, the wind farm objective may be predetermined, or it may be received in the form of a signal 141. Such signal may be provided by, e.g. a wind farm operator. Based on the received information, the wind farm controller 99 may provide a series of instructions 436, which may comprise the respective vibration mitigation actions for the different wind turbines 10 in the wind farm 101, as well as a corresponding sequence. In other examples, a plurality of wind farms 101 may be controlled by the centralized controller 99 in an equivalent manner.

In some examples, such instructions 436 may be received by, e.g. maintenance personnel. Moreover, such instructions 436 may also, or alternatively, be sent as commands to the wind turbine controllers 36 arranged in the individual wind turbines 10. According to this last variant, wind turbine controllers 36 may implement different vibration mitigation actions on the basis on the received information from the wind farm controller 99.

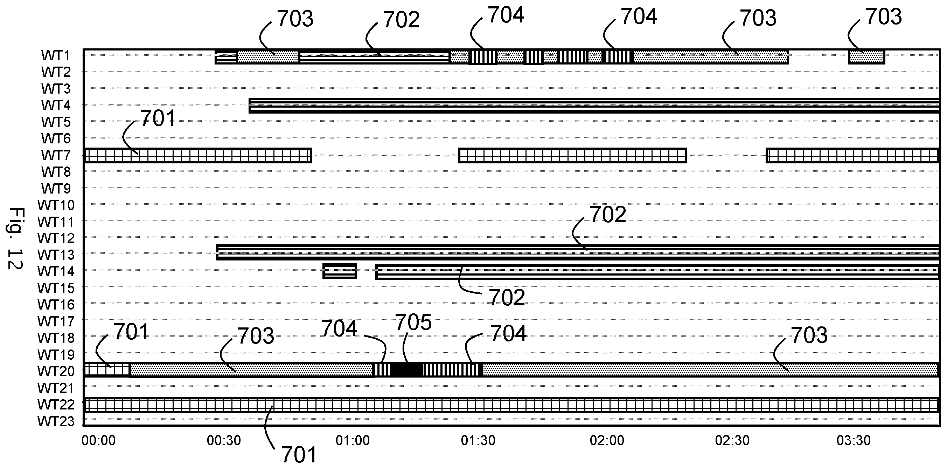

The implementation of a control method 200 like the one described with reference to the flowchart of Figure 10 in a fleet of wind turbines 10 may be represented by a dashboard as shown in Figure 12. In such a dashboard, a real time monitoring of the conditions of different wind turbines 10 may be obtained. In this example, a fleet consisting of a wind farm 101 with twenty-three wind turbines 10 is illustrated as an example. It is understood that, in other examples, equivalent dashboards to the one depicted in Figure 12 may be employed for controlling wind turbines 10 arranged in, e.g. multiple wind farms 101.

In some cases, an operational state of the wind turbines 10 may be further determined to provide enhanced controllability. In particular, a first operational state, labelled with 701 in Figure 12, may be used to indicate when a particular wind turbine 10 is with a rotor 18 locked and experiencing wind speeds above a certain threshold, e.g. 7 m/s. Such a state is, for instance, found for certain periods in WT7 and for the complete duration of the represented scenario in WT23. This information may be useful as such an operational state may be particularly prone to induce blade vibrations in case of, e.g. a sudden increase in the wind speed during a wind gust and/or a sudden change in the wind direction 28 relative to the longitudinal axis 30 of the corresponding wind turbine 10. In particular, wind gusts, even if short in duration, can induce significant oscillations which can damage a wind turbine blade 22.

A similar situation is illustrated by the state labelled with 702. In this case, the rotor 18 of the wind turbine 10 is misaligned with respect to the wind direction 28 by an angle exceeding a threshold, and the wind speed at the location of the wind turbine 10 exceeds a certain value, e.g. 10 m/s. Furthermore, the misalignment threshold used to characterize this state may depend on other factors such as whether the wind turbine 10 is connected to a utility grid, connected to a Diesel generator, or in a situation with a potential fault in an auxiliary system, e.g. on the yaw system. Such a state may also be indicative of a potential short-term blade vibration. In Figure 12, such a state is for instance present in wind turbines WT4, WT13 and WT14 for a significant period. Also WT1 exhibits alternating periods wherein the state 702 is present. However, in this case, blade vibrations are also detected. Overall, the identification of operational states 701, 702 may be used to pro-actively identify hazardous situations in different wind turbines 10 of a wind farm 101.

Blade vibration events are indicated with different labels in Figure 12 depending on the risk category assigned to the detected blade events. Hence, a label 703 is used for detected vibration events exhibiting a low risk, i.e. vibrations events for which the vibration, for instance as represented by an amplitude of the oscillation of a load, exceeds a detection threshold but is below a fatigue reference load. Such low risk vibration events are, for instance, experienced by wind turbines WT1 and WT20. As a result of this detection, certain mitigation actions may typically be conducted to prevent further excitation of the blade vibrations.

A situation comprising a blade vibration event with a medium risk is represented by the state labelled with 704. As indicated in Figure 12, both WT1 and WT19 exhibit, for limited periods of time, such medium risk vibration events, i.e. vibration events with an amplitude higher than a fatigue reference load but lower than an ultimate design load. Accordingly, certain vibration mitigation actions, potentially more severe than the ones employed for low risk vibration events, may be implemented.

Finally, a further state is labelled with 705. This state may correspond to the detection of a blade vibration event exhibiting a high risk, i.e. an event in which the amplitude of the oscillation exceeds both the fatigue reference load and the ultimate design load. In particular, in the example depicted in Figure 12, such a high risk event is momentarily present in WT20. It is worth noting that, apart from implementing urgent vibration mitigation actions, a potential replacement and/or repair of the blade 22 may be required in scenarios involving higher than ultimate design loads.

The provision of such an overview for the wind turbines 10 of a wind farm 101 (or, in other examples, of the wind turbines 10 of a fleet including even multiple wind farms 101) allows a coordinated and optimized response. In particular, the individual assignment of different operational states to the wind turbines 10, including both states with increased likelihood of developing blade vibrations and states wherein such blade vibrations are already present, may increase the ability to implement informed decisions on the operation of the wind farm 101.

In another aspect of the disclosure, a wind turbine 10 is provided. The wind turbine 10 comprises a rotor 18 with a plurality of blades 22, a sensor 121 arranged in at least one of the blades 22, and a control unit. The control unit is configured for receiving a signal acquired with the sensor 121 and for determining a magnitude indicative of an amplitude of a vibration of the blade 22 in an edgewise direction based on the received signal. The control unit is also configured for detecting a vibration event and assigning a risk category to the detected vibration event based on the determined magnitude. Furthermore, the control unit is configured for initiating a vibration mitigation action in the wind turbine 10 based on the risk category.

In an example, the control unit may be integrated, or the same, as the wind turbine controller 36. In some other examples, the control unit may be a dedicated control unit, which may be independent from the wind turbine controller 36. In any case, the control unit allows implementation of the previously described methods 100, 200, 500. As a result, a wind turbine 10 with increased reliability in front of blade vibration is achieved.

Different types of sensors may be used in different examples of the disclosure. In particular, the sensors 121 of the wind turbine 10 may comprise at least one of: a strain gauge sensor, a fiber Bragg grating sensor, or an accelerometer. Furthermore, different types of sensors may be combined in a single wind turbine 10. In some variants, sensors 121 may be used for other reasons as well. In particular, blade sensors may be arranged at a blade root region 24 of the blade 22 to assist during pitch control of the blades 22.

This written description uses examples to disclose the teaching, including the preferred embodiments, and also to enable any person skilled in the art to practice the present disclosure, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method (100) for mitigating an edgewise vibration in a blade (22) of a rotor (18) of a wind turbine (10) during a vibration event when the wind turbine (10) is not generating electrical power, the method comprising:
acquiring a signal with a sensor (121) arranged at the blade (22);
determining a magnitude indicative of a vibration of the blade (22) in an edgewise direction based on the acquired signal;
detecting the vibration event based on the determined magnitude;
assigning a risk category to the detected vibration event based on the determined magnitude; and
executing a vibration mitigation action in the wind turbine (10) based on the assigned risk category.

2. The method of claim 1, wherein determining the magnitude indicative of the vibration comprises determining an amplitude of a load oscillation.

3. The method of any of claims 1 or 2, wherein determining the magnitude indicative of the vibration comprises: determining an amplitude of the signals acquired with the sensor (121), or determining an amplitude of an oscillating load calculated at least partially based on the signal acquired with the sensor (121).

4. The method of any of claims 2 or 3, wherein detecting the vibration event comprises checking whether the determined amplitude is higher than a threshold, and further wherein assigning the risk category to the vibration event comprises comparing the determined amplitude with an edgewise design ultimate load and/or with an edgewise fatigue reference load.

5. The method of claim 4, wherein assigning the risk category to the vibration event comprises:
assigning a low risk if the determined amplitude is higher than the threshold but lower than the edgewise fatigue reference load;
assigning a medium risk if the determined amplitude is higher than the edgewise fatigue reference load but lower than the edgewise design ultimate load; and
assigning a high risk if the determined amplitude is higher than the edgewise fatigue reference load and higher than the edgewise design ultimate load.

6. The method of any of claims 2 to 5, comprising counting a number of cycles in the vibration event, and further comprising recording a history of vibration events endured by the blade (22), wherein recording the history comprises recording the number of cycles and the determined amplitude of the load oscillation over multiple vibrations events.

7. The method of any previous claim, wherein the vibration mitigation action comprises at least one of the following:
unlocking the rotor (18) if the rotor (18) of the wind turbine (10) is locked;
changing an orientation of the wind turbine (10) with respect to a wind direction (28); or
changing a pitch angle of the blade (22) such the pitch angle of the blade (22) is different than a pitch angle of at least another blade (22) of the rotor (18).

8. The method of any previous claim, wherein the vibration mitigation action is selected at least partially based on a comparison of a current operational state of the wind turbine (10) and one or more predetermined operational states of the wind turbine (10).

9. The method of claim 8, wherein the predetermined operational states of the wind turbine (10) comprise at least one of:
a first predetermined operational state wherein the rotor (18) is locked and a wind speed at a location of the wind turbine (10) exceeds a predefined threshold, specifically wherein the wind speed exceeds a value of 7 meters per second; or
a second predetermined operational state wherein the rotor (18) is in idling and a longitudinal axis (30) of the wind turbine (10) is misaligned by at least a predefined angle with respect to a wind direction (28) at a location of the wind turbine (10).

10. The method of any previous claim, wherein the vibration mitigation action is selected based on a previously selected vibration mitigation action for the vibration event.

11. The method of any previous claim, wherein the vibration mitigation action comprises a control action carried out autonomously by a control unit of the wind turbine (10).

12. A method for controlling a fleet of wind turbines (10), the method comprising carrying out the method according to any of claims 1 to 11 for at least a subset of the wind turbines (10) in the fleet of wind turbines (10).

13. The method of claim 12, wherein executing the vibration mitigation actions comprises coordinating the vibration mitigation actions for at least a subset of the wind turbines (10) in the fleet of wind turbines (10), specifically wherein coordinating the vibration mitigation actions comprises determining the vibration mitigation actions in a centralized controller (99) based on a fleet objective.

14. A wind turbine (10) comprising a rotor (18) with a plurality of blades (22), a sensor (121) arranged in at least one of the blades (22), and a control unit, the control unit being configured for:
receiving a signal acquired with the sensor (121);
determining a magnitude indicative of an amplitude of a vibration of the blade (22) in an edgewise direction based on the received signal;
detecting a vibration event and assigning a risk category to the detected vibration event based on the determined magnitude; and
initiating a vibration mitigation action in the wind turbine (10) based on the risk category.

15. The wind turbine (10) of claim 14, wherein the sensor (121) comprises at least one of: a strain gauge sensor, a fiber Bragg grating sensor, or an accelerometer.
